# EUROPEAN PATENT APPLICATION

(11) **EP 4 414 190 A1**
(43) Date of publication of application: **14.08.2024**
(21) Application number: 23156202.6
(22) Date of filing: 13.02.2023
(51) Int. Cl.: B60H 1/00, B60H 3/00, B60H 3/06, B01D 46/00, B01D 46/44

(54) **DEVICE, SYSTEM, AND METHOD FOR DETERMINING A LOADING STATUS ASSOCIATED WITH A FILTER ELEMENT OF A VEHICLE**

(71) Applicant: MANN+HUMMEL Ventures Pte. Ltd., Singapore 139234 (SG)
(72) Inventor: CHOWANIETZ, Volkmar, 95448 Bayreuth (DE)
(74) Representative: Mann + Hummel Intellectual Property

(57) **Abstract**

Disclosed is a system (100) for use with a vehicle ventilation system having a fluid channe (150)l, the system (100) configured to determine a loading status associated with a filter element (120) comprising, a dosing module (110) configured to provide a fluid having a pre-determined concentration of a first component into the fluid channel (150); the filter element (120) arranged in fluid communication with the dosing module (110) to filter the pre-determined concentration of the first component in the fluid channel (150), to provide a filtered fluid comprising a modified concentration of the first component; one or more sensors (130, 132) arranged in fluid communication with the filter element (120), and arranged to measure a value indicative of the modified concentration of the first component in the filtered fluid; and a processor (140) operable to determine the loading status associated with the filter element (120).

## Description

### TECHNICAL FIELD

The present disclosure relates to a device and a system for use with a vehicle ventilation system having a fluid channel, the system configured to determine a loading status associated with a filter element. The present disclosure also relates to a method for determining a loading status of a filter element of a vehicle comprising a ventilation system having a fluid channel.

### BACKGROUND ART

The following discussion of the background art is intended to facilitate an understanding of the present disclosure only. It should be appreciated that the discussion is not an acknowledgement or admission that any of the material referred to was published, known or is part of the common general knowledge of the person skilled in the art in any jurisdiction as of the priority date of the disclosure.

Activated carbon filters can be used as cabin air filters in agriculture vehicles, e.g. agriculture tractor, during hazardous substances, e.g. pesticide spraying operations. To protect the operator against such hazardous substances, such filters must be able to separate pesticides from air with a high efficiency.

Currently, the loading status of cabin air filters is determined by measuring the residual loading status of filters that were retested after their service life. A maximum service life is estimated from the combination of the actual service life, and the difference between the loading statuses of filters in the new and used conditions. However, real-time determination of the loading status of such filters is not available, leading to ambiguity regarding the change interval of the filter.

Accordingly, there exists a need for an improved system for use with a vehicle ventilation system, that seeks to address at least one of the aforementioned issues.

### SUMMARY

The disclosure was conceptualized to provide an improved system for use with a vehicle ventilation system having a fluid channel and configured to determine a loading status associated with a filter element in real-time or near real-time. To this end, the improved system enables a user to monitor the loading status and operating condition associated with the filter element in real-time, to accurately determine the loading status, e.g., a parameter associated with the efficiency, loading rate, used life, remaining useful life, of said filter element before the actual service life of the filter element. The disclosure thus provides a system for continuous or discontinuous monitoring of the filter element during operation. This reduces the uncertainty when determining the loading status associated with the filter element and allows a user to efficiently determine the actual service life of the filter element, to optimize the change interval of said filter element.

According to one aspect of the disclosure, there is provided a system for use with a vehicle ventilation system having a fluid channel, the system configured to determine a loading status associated with a filter element comprising, (i) a dosing module configured to provide a fluid having a pre-determined concentration of a first component into the fluid channel; (ii) the filter element arranged in fluid communication with the dosing module to filter the pre-determined concentration of the first component in the fluid channel, to provide a filtered fluid comprising a modified concentration of the first component; (iii) one or more sensors arranged in fluid communication with the filter element, and arranged to measure a value indicative of the modified concentration of the first component in the filtered fluid; and (iv) a processor operable to obtain a first input of a value indicative of the pre-determined concentration of the first component, and a second input of the value indicative of the modified concentration of the first component, and to determine the loading status associated with the filter element as a function of the value indicative of the pre-determined concentration the first component, and the value indicative of the modified concentration of the first component.

In various embodiments, the filter element is configured to filter the fluid having the pre-determined concentration of the first component, to provide a reduced concentration of the first component in the filtered fluid.

In various embodiments, the filter element is arranged downstream to the dosing module, and the one or more sensors are arranged downstream to the filter element.

In various embodiments, the dosing module is configured to inject the fluid into the fluid channel, for a pre-determined duration.

In various embodiments, the filter element is a chemical filter, preferably a chemical sorption filter.

In various embodiments, a sensor among the one or more sensors has a sensitivity range which differs to another sensor among the one or more sensors.

In various embodiments, at least one of the one or more sensors is a volatile organic compound (VOC) sensor. In some embodiments, the VOC sensor has a sensitivity range of 1 to 800 ppm, preferably 1 to 500 ppm.

In various embodiments, the first component is cyclohexane or ethyl acetate.

In various embodiments, the dosing module is disposed at an input of the fluid channel or is disposed within the fluid channel.

In various embodiments, the system further comprises a diverter configured to redirect the filtered fluid to the vehicle, or to an exhaust for release into an external environment, wherein the diverter is disposed downstream to the filter element and/or the one or more sensors.

In various embodiments, the loading status associated with the filter element comprises at least one of: a parameter associated with an efficiency of the filter element, a parameter associated with a loading rate of the filter element, a parameter associated with a used life of the filter element, or a parameter associated with a remaining useful life of the filter element.

In various embodiments, the vehicle is an agricultural vehicle, for example an agricultural tractor having a vehicle ventilation system.

According to another aspect of the disclosure, there is provided a vehicle comprising the vehicle ventilation system according to the various embodiments of the disclosure.

According to another aspect of the disclosure, there is provided a device for use with a vehicle comprising a ventilation system having a fluid channel, the device configured to determine a loading status associated with a filter element comprising at least one processor; and a memory having instructions stored therein, the instructions, when executed by the at least one processor, cause the at least one processor to: (i) obtain a first input associated with a value indicative of a pre-determined concentration of a first component in a fluid provided to a fluid channel; (ii) obtain a second input associated with a value indicative of a modified concentration of the first component in the fluid channel after the fluid passes through the filter element; and (iii) determine the loading status associated with the filter element as a function of the value indicative of the pre-determined concentration of the first component and the value indicative of the modified concentration of the first component.

According to another aspect of the disclosure, there is provided a method of determining a loading status of a filter element of a vehicle comprising a ventilation system having a fluid channel, the method comprising the steps of (i) providing a dosing module for providing a fluid comprising a pre-determined concentration value of a first component, into the fluid channel; (ii) providing the filter element arranged in fluid communication with the dosing module, for filtering the first component with the pre-determined concentration in the fluid channel, to provide a filtered fluid comprising a modified concentration of the first component; (iii) providing one or more sensors arranged in fluid communication with the filter element, for measuring a value indicative of the modified concentration of the first component in the filtered fluid; and (iv) providing a processor, for obtaining a first input of a value indicative of the pre-determined concentration of the first component, and a second input of the value indicative of the modified concentration of the first component, and for determining the loading status associated with the filter element as a function of the value of the pre-determined concentration the first component, and the value indicative of the modified concentration of the first component.

According to another aspect of the disclosure, there is provided a computer program product comprising software instruction installed thereon, such that when executed on the processor, executes the steps of the method of determining a loading status of a filter element of a vehicle comprising a ventilation system having a fluid channel.

### BRIEF DESCRIPTION OF DRAWINGS

The disclosure will be better understood with reference to the detailed description when considered in conjunction with the non-limiting examples and the accompanying drawings, in which:
- FIG. 1 shows an exemplary schematic illustration of a system 100 for use with a vehicle ventilation system having a fluid channel 150, and configured to determine a loading status associated with the filter element 120;
- FIG. 2 shows another exemplary schematic illustration of the system 200 for use with a vehicle ventilation system having a fluid channel 150, and configured to determine a loading status associated with the filter element 120;
- FIG. 3 shows an exemplary schematic illustration of a device 300 for use with a vehicle comprising a ventilation system having a fluid channel, the device configured to determine a loading status associated with a filter element comprising at least one processor 320, and a memory 310 having instruction stored therein; and
- FIG. 4 shows an exemplary flowchart of a method 400 of determining a loading status of a filter element of a vehicle comprising a ventilation system having a fluid channel.

### DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the", and the term "at least one" as used with regard to a feature or element include a reference to one or more of the features or elements. As used herein, the term "and/or" includes any and all combinations of one or more of the associated listed items.

Throughout the description, the term "vehicle ventilation system", as used herein, refers to the ventilation system of a vehicle which provides air distribution and ventilation to a cabin of the vehicle. The vehicle ventilation system may also be referred to as cabin air filtration system. The vehicle ventilation system may also be a ventilation, air conditioning and heating (HVAC) system of the vehicle. In various embodiments, the vehicle ventilation system includes a fluid channel to allow fluid flow from an external environment into the cabin and vice versa, and/or to redirect or recirculate fluid to the cabin of the vehicle.

Throughout the description, the term "fluid", as used herein, refers to a gas, a liquid, or combinations thereof such as in the form of aerosols. In various embodiments, the fluid may be gaseous and may comprise a plurality of components, including at least, a first component such as cyclohexane or ethyl acetate. In some embodiments, the fluid may include a hazardous substance such as pesticide. For example, the fluid may include a pesticide mixed in a gas or a liquid. Non-limiting examples of pesticides include herbicide, insecticide, nematicide, molluscicide, piscicide, avicide, rodenticide, bactericide, insect repellent, animal repellent, microbicide, fungicide, and lampricide.

Throughout the description, the term "dosing module", as used herein, includes a device or mechanism suitable for providing, via, for example, injecting the fluid into a fluid channel of a vehicle ventilation system. In some embodiments, the dosing module may provide the fluid having the first component. In some other embodiments, the fluid may include a plurality of components and the dosing module may provide the fluid having the plurality of components into the fluid channel. In an embodiment, the dosing module may be a spray device having a blower for providing the fluid having at least, the first component. That is, the blower may provide the fluid having the first component and/or the fluid having the plurality of components.

Throughout the description, the term "obtain", as used herein, refers to the processor which actively obtains the inputs, or passively receives inputs from the dosing module and/or the one or more sensors. The term obtain may also refer to the processor or the dosing module, which receives or obtains inputs from a communication interface, e.g. a user interface. The processor or the dosing module may also receive or obtain the inputs via a memory, a register, and/or an analog-to-digital port.

Throughout the description, the term "function", as used herein, refers to a relationship or expression, e.g. mathematical relationship, between the loading status associated with the filter element, and one or more variables such as the first input of a value indicative of the pre-determined concentration of the first component and the second input of a value indicative of the modified concentration of the first component.

Throughout the description, the term "processor(s)", as used herein, refers to a circuit, including analog circuits or components, digital circuits or components, or hybrid circuits or components. Any other kind of implementation of the respective functions which will be described in more detail below may also be understood as a "circuit" in accordance with an alternative embodiment. A digital circuit may be understood as any kind of a logic implementing entity, which may be special purpose circuitry or a processor executing software stored in a memory, or a firmware.

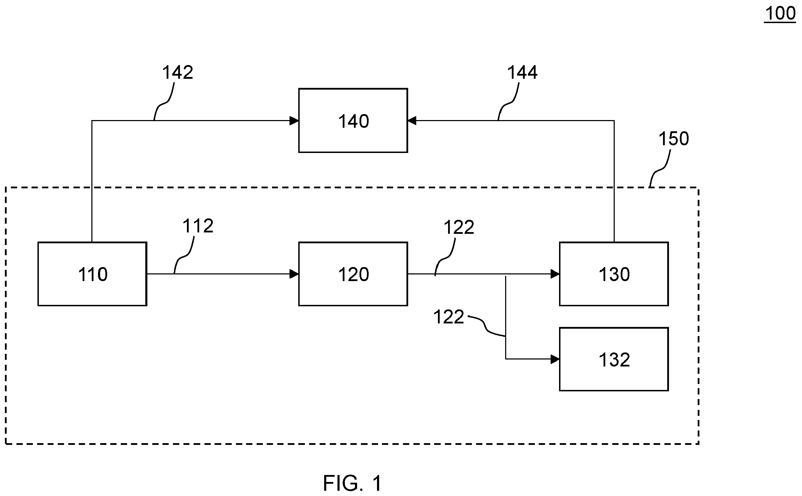

FIG. 1 shows an exemplary schematic illustration of a system 100 for use with a vehicle ventilation system having a fluid channel 150 and configured to determine a loading status associated with the filter element 120. The fluid channel 150 may be part of the vehicle ventilation system, e.g. HVAC system, located within the vehicle itself, and the processor 140 may be configured to execute instructions, to determine the loading status associated with the filter element 120.

In various embodiments, the vehicle may be an agricultural vehicle, which may be used for agricultural, e.g. farming purposes. In some embodiments, the vehicle may be an agricultural tractor including self-propelled sprayers. In some other embodiments, the vehicle may be an agricultural tractor including mounted or trailed sprayers. It is contemplated that the vehicle may also include passenger vehicles including a vehicle ventilation system.

Referring to FIG. 1, system 100 includes a dosing module 110 configured to provide a fluid 112 having a pre-determined concentration of a first component into the fluid channel 150. The pre-determined concentration of the first component may be a preset value stored in a memory in signal communication with the dosing module 110 or may be determined by a user and provided to the dosing module 110, e.g. via a user interface, which includes a metering device configured to inject the fluid 112 having the pre-determined concentration of the first component into the fluid channel 150. Alternatively, the pre-determined concentration of the first component may be provided to the processor 140 which provides the pre-determined concentration of the first component to the dosing module 110.

In various embodiments, the dosing module 110 may be configured to inject the fluid 112 into the fluid channel 150 for a pre-determined duration. In accordance with exemplary embodiments of the disclosure, the fluid 112 provided by the dosing module 110 may be in addition, or in alternative to air input, e.g. raw air intake or ambient air that enters the fluid channel 150 of the vehicle ventilation system. In other words, raw air intake, a mixture of the raw air intake with the fluid 112, or the fluid 112 only may enter the fluid channel 150. For example, in some embodiments, raw air intake may be blocked, e.g. via a closure or valve, and the fluid 112 may not be dissolved or mixed with the raw air intake. The pre-determined duration may be configured variably to ensure that sufficient fluid 112 is provided into the fluid channel 150 for determining the loading status of the filter element 120. In various embodiments, the pre-determined duration may range from 1 second to 5 minutes, preferably within the range of 30 seconds to 60 seconds. That is, the fluid 112 may be injected into the fluid channel 150 in short pluses, preferably in the range of 30 seconds to 60 seconds.

In various embodiments, the first component of the fluid 112 may include a control substance which is a hazardous substance. In some embodiments, the first component may be cyclohexane or ethyl acetate, and the fluid 112 includes a pre-determined concentration of said first component. In various embodiments, the pre-determined concentration of the first component may be within the range of 1 ppm to 800 ppm, preferably within the range of 400 ppm to 600 ppm. In some embodiments, the pre-determined concentration of the first component may be 500 ppm.

System 100 further includes a filter element 120 arranged in fluid communication with the dosing module 110 to filter the fluid 112 having the pre-determined concentration of the first component in the fluid channel 150, to provide a filtered fluid 122 comprising a modified concentration of the first component. The filter element 120 may filter the fluid 112 to modify and/or reduce the pre-determined concentration of the first component in the filtered fluid 112, by removing part of or all of the first component in the fluid 112. The filtered fluid 122 may therefore have a reduced concentration of the first component. In some embodiments, the reduced concentration of the first component in the filtered fluid 122 may be zero. That is, the filter element 120 may remove the first component in the fluid 112, such that the filtered fluid 122 is substantially free of the first component.

In various embodiments, the filter element 120 may be a chemical filter, preferably a chemical sorption filter. The filter element 120 may filter, e.g. modify by reducing or removing the first component via absorption or adsorption. For example, the filter element 120 may include an absorbent which absorbs a part of, or all of the first component in the fluid 112. In another example, the filter element 120 may include adsorption media to modify, e.g. reduce or remove the first component from the fluid 112 via surface adherence. It is contemplated that the filter element 120 may filter the first component in the fluid 112, via ion exchange.

In some embodiments, the filter element 120 may be an activated carbon filter comprising carbon in granular or powdered form., and may remove the first component, e.g. cyclohexane or ethyl acetate, in the fluid 112 via adsorption. The filter element 120 may also be regenerated or reactivated by thermally processing the activated carbon to destroy the absorbed first components contained on its surface. In various embodiments, the filter element 120 may be replaceable.

System 100 further includes one or more sensors 130, 132 arranged in fluid communication with the filter element 120 and arranged to measure a value indicative of the modified concentration of the first component in the filtered fluid 122. Although two sensors 130, 132 are depicted in the example of FIG. 1, the disclosure is not limited thereto. For example, the system 100 may include one, two, three or more than three sensors. In various embodiments, each sensor 130, 132 may have a different sensitivity range. That is, a sensor 130 among the one or more sensors 130, 132 may have a sensitivity range that differs to that of another sensor 132. In various embodiments, at least one sensor 130 or 132, or all the sensors 130, 132 among the one or more sensors 130, 132 may measure the value indicative of the modified concentration of the first component in the filtered fluid 122.

In various embodiments, at least one of the one or more sensors 130, 132 may be a volatile organic compound (VOC) sensor, configured to measure a value indicative of the modified, e.g. reduced concentration of the first component in the filtered fluid 122. The VOC sensor may have a sensitivity range of 1 to 800 ppm, preferably of 1 to 500 ppm. In some embodiments, each sensor 130, 132 among the one or more sensors 130, 132 may be a VOC sensor, each including a different sensitivity range. For example, a first sensor 130 may be a VOC sensor having a sensitivity range of 300 to 450 ppm, and a second sensor 132 may be another VOC sensor having a sensitivity range of 400 to 550 ppm. Non-limiting examples of VOC sensors include photoionization detectors, flame ionization detectors, metal oxide semiconductor sensors. Specific VOC sensor types and the sensitivity range of said VOC sensor may be selected based on the fluid 112 type, the first component, and/or the pre-determined concentration of the first component.

Referring to FIG. 1, system 100 further includes a processor 140 operable to obtain a first input 142 of a value indicative of the pre-determined concentration of the first component, and a second input 144 of the value indicative of the modified concentration of the first component. The processor 140 may receive or obtain the first input 142 from the dosing module 110. The first input 142 of the value indicative of the pre-determined concentration of the first component in the fluid 112 may be preset and stored within a memory; or may be provided by a user to the dosing module 110, and the processor 140 may receive or obtain said first input 142. Alternatively, a user may provide the first input 142 to the processor 140. The processor 140 may also receive or obtain the second input 144 from the one or more sensors 130, 132. For example, the processor 140 may receive or obtain one or more second inputs 144, each second input 144 provided by each sensor 130, 132 among the one or more sensors 130, 132.

In various embodiments, the processor 140 may be in signal communication with the dosing module 110 and the one or more sensors 130, 132, and may receive or obtain the first input 142 and second input 144 via a pre-defined wireless communication protocol. Examples of the pre-defined wireless communication protocols include: global system for mobile communication (GSM), enhanced data GSM environment (EDGE), wideband code division multiple access (WCDMA), code division multiple access (CDMA), time division multiple access (TDMA), wireless fidelity (Wi-Fi), voice over Internet protocol (VoIP), worldwide interoperability for microwave access (Wi-MAX), Wi-Fi direct (WFD), an ultra-wideband (UWB), infrared data association (IrDA), Bluetooth, ZigBee, SigFox, LPWan, LoRaWan, GPRS, 3G, 4G, LTE, and 5G communication systems. Alternatively, the processor 140 may receive or obtain the first input 142 and the second input 144 via wired means.

In system 100, the processor 140 is further operable to determine the loading status associated with the filter element 120 as a function of the value indicative of the pre-determined concentration of the first component, i.e. first input 142, and the value indicative of the modified concentration of the first component, i.e. second input 144. In various embodiments, the loading status associated with the filter element 120 may be determined based at least on the first input 142, and the second input 144, and may include other variables such as the relative humidity and temperature of the fluid 112 and/or the filtered fluid 122. In some embodiments, it is contemplated that the first input 142, the second input 144, and/or value(s) obtained based on said two inputs such as a difference between the first 142 and second 144 inputs, or a ratio thereof, may be compared to reference data which may be reference data for other variables, for example, relative humidity and temperature. The reference data may be input, e.g. via a user interface and provided to the processor 140 or may be stored within a memory of the processor 140.

In some embodiments, the loading status associated with the filter element 120 may include a parameter associated with an efficiency of the filter element 120. For example, the parameter associated with the efficiency of the filter element 120 may be calculated as a ratio between the first input 142 of the value indicative of the pre-determined concentration of the first component in the fluid 112, and the second input 144 of the value indicative of the modified concentration of the first component in the filtered fluid 122. In an embodiment, the parameter associated with the efficiency of the filter element 120 may be compared against a pre-determined threshold value, e.g. a value indicating that the filter element 120 may not be functioning at an optimal level, and an alarm may be triggered to inform the operator of the same.

In some other embodiments, the loading status associated with the filter element 120 may include a parameter associated with a remaining useful life of the filter element 120. For example, the parameter associated with a remaining useful life of the filter element 120 may be determined based on the first input 142 of the value indicative of the pre-determined concentration of the first component, and the second input 144 when the second input 144 is at a value that is a percentage of the value indicative of the pre-determined concentration of the first component.

In some other embodiments, the loading status associated with the filter element 120 may include a parameter associated with a loading rate of the filter element 120. For example, the parameter associated with the loading rate of the filter element 120 may be determined by comparing the measured values, based on the first input 142 and/or second 144 input, with an expected value on a calibration (reference) table. The parameter, e.g. loading factor, may be determined from the calibration table.

In some other embodiments, the loading status associated with the filter element 120 may include a parameter associated with a leakage rate of the filter element 120. For example, the parameter associated with the leakage rate of the filter element 120 may be determined by comparing measured values, based on the first 142 and/or second 144 inputs, with a required value, and a model may be used to obtain said parameter. For instance, said parameter may be expressed as a ratio of the measured value to the required value.

In some other embodiments, the loading status associated with the filter element 120 may also include a parameter associated with a used life of the filter element 120.

Therefore, in accordance with various embodiments, the loading status associated with the filter element 120 may be provided in different ways. Non-limiting examples of the loading status may include a value indicative of: a percentage of the efficiency of the filter element 120, a percentage of the loading rate of the filter element 120, a percentage of the used life or remaining used life of the filter element 120, and/or a percentage of the leakage rate of the filter element 120.

As shown in FIG. 1, the dosing module 110 may be disposed within the fluid channel 150. In addition, the filter element 120 and the one or more sensors 130, 132 may also be disposed within the fluid channel 150. The fluid channel 150 may guide the fluid 112 flow as it passes through the filter element 120 and the one or more sensors 130, 132. Alternativity, in some embodiments, the dosing module 110 may be disposed at the input, for example, at the mouth of and external to the fluid channel 150. The filter element 120 and the one or more sensors 130, 132 may be disposed within the fluid channel 150 to receive the fluid 112 and to measure the value indicative of the modified concentration of the first component in the filtered fluid 122.

In various embodiments, the filter element 120 may be arranged downstream to the dosing module 110 to filter the fluid 112 having the pre-determined concentration of the first component in the fluid channel 150, and the one or more sensors 130, 132 may be arranged downstream to the filter element 120 to measure the value indicative of the modified concentration of the first component in the filtered fluid 122. Said arrangement as shown in FIG. 1 may be in relation to the calibration state, where the system 100 is configured to determine the loading status associated with the filter element 120. In some embodiments, the one or more sensors 130, 132 may be blocked in the calibration state to avoid or minimize the risk of sensor 130, 132 drift, which may result in inaccurate measurements of the value indicative of the modified concentration of the first component in the filtered fluid 122. It is contemplated that the arrangement of the dosing module 110, the filter element 120 and the one or more sensors 130, 132 may be reversed. In operation, e.g. use state, the arrangements of the filter element 120 and the one or more sensors 130, 132 may vary in accordance with the use state of the system 100.

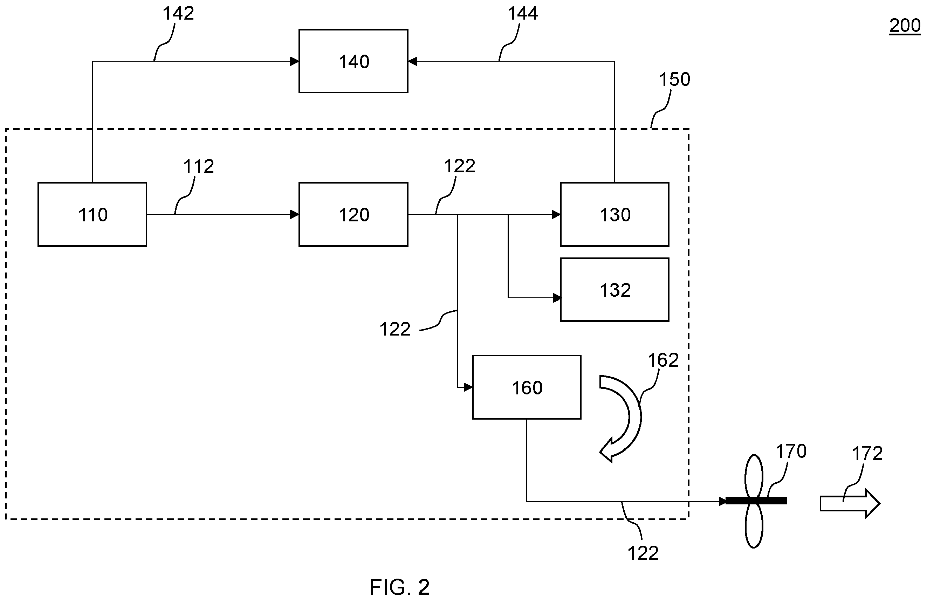

FIG. 2 shows another exemplary schematic illustration of the system 200 for use with a vehicle ventilation system having a fluid channel 150, and configured to determine a loading status associated with the filter element 120. The system 200 as shown in FIG. 2 may be based on system 100 shown with reference to FIG. 1, and repeated descriptions are omitted for brevity. Referring to FIG. 2, system 200 may further include a diverter 160 disposed within the fluid channel 150 and downstream to the filter element 120. Alternatively, the diverter 160 may be disposed downstream to the one or more sensors 130, 132. The diverter 160 may be a diverter valve configured to direct the filtered fluid 122 to the vehicle or to an exhaust 170.

In some embodiments, the diverter 160 may be configured to redirect 162 the filtered fluid 122 to the vehicle, for example, via the fluid channel 150 which provides the filtered fluid 122 to the cabin of the vehicle where the operator may be situated. Since the filtered fluid 122 which is redirected to the vehicle may have the modified, e.g. reduced concentration of the first component, the safety of the operator exposed to the filtered fluid 122 may not be compromised.

In some other embodiments, system 200 may further include the exhaust 170 disposed external, e.g. at an end of the fluid channel 150. The diverter 160 may direct the filtered fluid 122 to the exhaust 170 for release 172 into the external environment. Since the filtered fluid 122 released 172 into the external environment includes a modified, e.g. reduced concentration of the first component, hazardous substances may not be released into the external environment and may not pollute the environment.

According to another aspect for the disclosure, there is provided a vehicle comprising the vehicle ventilation system as described with reference to system 100, 200. The vehicle may be an agricultural vehicle.

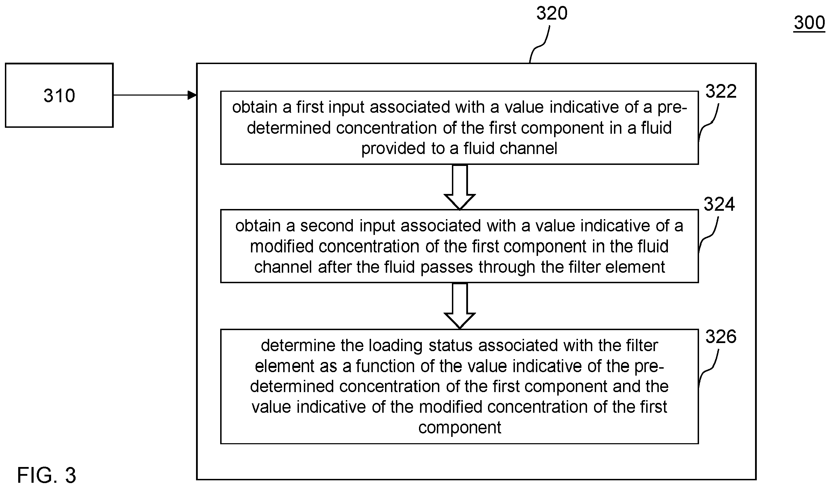

FIG. 3 shows an exemplary schematic illustration of a device 300 for use with a vehicle comprising a ventilation system having a fluid channel, the device configured to determine a loading status associated with a filter element comprising at least one processor 320, and a memory 310 having instruction stored therein, in accordance with another aspect of the disclosure. The device 300 may be configured for use with the system 100, 200 described with reference to FIGS. 1 and 2.

As shown in FIG. 3, device 300 includes a memory 310 having instructions stored therein, such that when executed by the at least one processor 320, cause the at least one processor to: (i) obtain a first input associated with a value indicative of a pre-determined concentration of the first component in a fluid provided to a fluid channel (step 322); (ii) obtain a second input associated with a value indicative of a modified concentration of the first component in the fluid channel after the fluid passes through the filter element (step 324); and (iii) determine the loading status associated with the filter element as a function of the value indicative of the pre-determined concentration of the first component and the value indicative of the modified concentration of the first component (step 326).

In various embodiments, the at least one processor 320 may be configured to execute steps 322 to 326 in accordance with the processor 140 discussed in relation to system 100, 200 of FIGS. 1 and 2, and repeated description will be omitted for brevity.

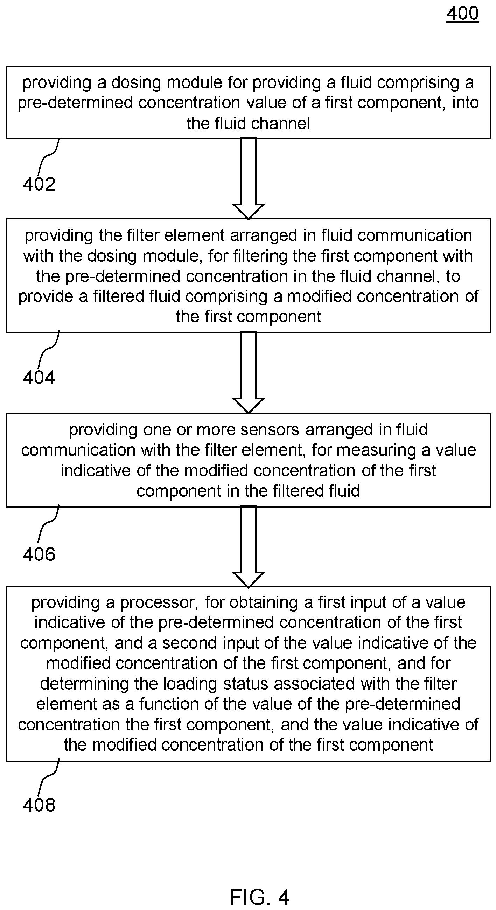

FIG. 4 shows an exemplary flowchart of a method 400 of determining a loading status of a filter element of a vehicle comprising a ventilation system having a fluid channel, in accordance with another aspect of the disclosure. Method 400 includes the steps of: (i) providing a dosing module for providing a fluid comprising a pre-determined concentration value of a first component, into the fluid channel (step 402); (ii) providing the filter element arranged in fluid communication with the dosing module, for filtering the first component with the pre-determined concentration in the fluid channel, to provide a filtered fluid comprising a modified concentration of the first component (step 404); (iii) providing one or more sensors arranged in fluid communication with the filter element, for measuring a value indicative of the modified concentration of the first component in the filtered fluid (step 406); and (iv) providing a processor, for obtaining a first input of a value indicative of the pre-determined concentration of the first component, and a second input of the value indicative of the modified concentration of the first component, and for determining the loading status associated with the filter element as a function of the value of the pre-determined concentration the first component, and the value indicative of the modified concentration of the first component (step 408). The method 400 of determining the loading status of the filter element of a vehicle comprising a ventilation system having a fluid channel may be based on and refer to the system 100, 200 described with reference to FIGS. 1 and 2, and repeated descriptions will be omitted.

Various embodiments of the disclosure further provide a computer program product, comprising software instruction installed thereon, such that when executed by the processor, executes steps 402 to 408 of method 400 described with reference to FIG. 4.

The present disclosure provides an improved system that allows for continuous and discontinuous monitoring of the filter element for determining a loading status associated with the filter element. Embodiments of the present disclosure allows a user to accurately determine the loading status associated with the filter element in real-time, to enable the user to efficiently determine the actual service life of the filter element. This provides for the optimization of the change interval for the filter element.

While the disclosure has been particularly shown and described with reference to specific embodiments, it should be understood by those skilled in the art that various changes in form and detail may be made therein without departing from the scope of the disclosure as defined by the appended claims. The scope of the disclosure is thus indicated by the appended claims.

## Claims

1. A system (100, 200) for use with a vehicle ventilation system having a fluid channel (150), the system (100, 200) configured to determine a loading status associated with a filter element (120) comprising
(i) a dosing module (110) configured to provide a fluid (112) having a pre-determined concentration of a first component into the fluid channel (150);
(ii) the filter element (120) arranged in fluid communication with the dosing module (110) to filter the pre-determined concentration of the first component in the fluid channel (150), to provide a filtered fluid (122) comprising a modified concentration of the first component;
(iii) one or more sensors (130, 132) arranged in fluid communication with the filter element (120), and arranged to measure a value indicative of the modified concentration of the first component in the filtered fluid (122);
(iv) a processor (140) operable to obtain a first input (142) of a value indicative of the pre-determined concentration of the first component, and a second input (144) of the value indicative of the modified concentration of the first component, and to determine the loading status associated with the filter element (120) as a function of the value indicative of the pre-determined concentration the first component, and the value indicative of the modified concentration of the first component.

2. The system (100, 200) of claim 1, wherein the filter element (120) is configured to filter the fluid (112) having the pre-determined concentration of the first component, to provide a reduced concentration of the first component in the filtered fluid (122).

3. The system (100, 200) of any one of the preceding claims, wherein the filter element (120) is arranged downstream to the dosing module (110), and the one or more sensors (130, 132) are arranged downstream to the filter element (120).

4. The system (100, 200) of any one of the preceding claims, wherein the dosing module (110) is configured to inject the fluid (112) into the fluid channel (150), for a pre-determined duration.

5. The system (100, 200) of any one of the preceding claims, wherein the filter element (120) is a chemical filter, preferably a chemical sorption filter.

6. The system (100, 200) of any one of the preceding claims, wherein a sensor (130) among the one or more sensors (130, 132) has a sensitivity range that differs from another sensor (132) among the one or more sensors (130, 132).

7. The system (100, 200) of any one of the preceding claims, wherein at least one of the one or more sensors (130, 132) is a volatile organic compound (VOC) sensor, and optionally, wherein the VOC sensor has a sensitivity range of 1 to 800 ppm, further optionally 1 to 500 ppm.

8. The system (100, 200) of any one of the preceding claims, wherein the first component is cyclohexane or ethyl acetate.

9. The system (100, 200) of any one of the preceding claims, wherein the dosing module (110) is disposed at an input of the fluid channel (150), or is disposed within the fluid channel (150).

10. The system (100, 200) of any one of the preceding claims, further comprising a diverter (160) configured to redirect (162) the filtered fluid (122) to the vehicle, or to an exhaust (170) for release (172) into an external environment,
wherein the diverter (160) is disposed downstream to the filter element (120) and/or the one or more sensors (130, 132).

11. The system (100, 200) of any one of the preceding claims, wherein the loading status associated with the filter element (120) comprises at least one of: a parameter associated with an efficiency of the filter element (120), a parameter associated with a loading rate of the filter element (120), a parameter associated with a used life of the filter element (120), or a parameter associated with a remaining useful life of the filter element (120).

12. A vehicle comprising the vehicle ventilation system according to any one of the preceding claims.

13. A device (300) for use with a vehicle comprising a ventilation system having a fluid channel, the device configured to determine a loading status associated with a filter element comprising at least one processor (320); and a memory (310) having instructions stored therein, the instructions, when executed by the at least one processor, cause the at least one processor (320) to:
(i) obtain a first input associated with a value indicative of a pre-determined concentration of a first component in a fluid provided to a fluid channel (322);
(ii) obtain a second input associated with a value indicative of a modified concentration of the first component in the fluid channel after the fluid passes through the filter element (324); and
(iii) determine the loading status associated with the filter element as a function of the value indicative of the pre-determined concentration of the first component and the value indicative of the modified concentration of the first component (326).

14. A method (400) of determining a loading status of a filter element of a vehicle comprising a ventilation system having a fluid channel, the method comprising the steps of
(i) providing a dosing module for providing a fluid comprising a pre-determined concentration value of a first component, into the fluid channel (402);
(ii) providing the filter element arranged in fluid communication with the dosing module, for filtering the first component with the pre-determined concentration in the fluid channel, to provide a filtered fluid comprising a modified concentration of the first component (404);
(iii) providing one or more sensors arranged in fluid communication with the filter element, for measuring a value indicative of the modified concentration of the first component in the filtered fluid (406);
(iv) providing a processor, for obtaining a first input of a value indicative of the pre-determined concentration of the first component, and a second input of the value indicative of the modified concentration of the first component, and for determining the loading status associated with the filter element as a function of the value of the pre-determined concentration the first component, and the value indicative of the modified concentration of the first component (408).

15. A computer program product, comprising software instructions installed thereon, such that when executed on the processor, executes the steps of claim 14.
